# EUROPÄISCHE PATENTSCHRIFT

(11) **EP 4 017 755 B1**
(45) Veröffentlichungstag und Bekanntmachung des Hinweises auf die Patenterteilung: **25.10.2023**
(21) Anmeldenummer: 20780956.7
(22) Anmeldetag: 15.09.2020
(51) Int. Cl.: B60L 3/12, B60L 15/20

(54) **FAHRZEUG UND VERFAHREN ZU DESSEN BETRIEB**
VEHICLE AND METHOD FOR OPERATING SAME
VÉHICULE ET PROCÉDÉ POUR FAIRE FONCTIONNER CE VÉHICULE

(30) Priorität: 24.09.2019 DE 102019214570
(43) Veröffentlichungstag der Anmeldung: 29.06.2022
(73) Patentinhaber: Siemens Mobility GmbH, 81739 München (DE)
(72) Erfinder: BERGNER, Hans, 76187 Karlsruhe (DE); FOERTH, Christian, 91056 Erlangen (DE); HOKE, Karsten, 39217 Schönebeck OT Pretzien (DE); KILIAN, Lennart, 82131 Gauting (DE); KOCH, Stefan, 91466 Gerhardshofen (DE); LANG, Norbert, 90765 Fürth (DE); RÜGER, Niklas, 90574 Roßtal (DE)
(74) Vertreter: Siemens Patent Attorneys
(86) Internationale Anmeldenummer: PCT/EP2020/075684
(87) Internationale Veröffentlichungsnummer: WO 2021/058319

(56) Entgegenhaltungen:
- DE-A1-102015 203 303
- DE-A1-102017 213 149

## Beschreibung

Die Erfindung bezieht sich auf ein Fahrzeug, insbesondere Schienenfahrzeug, mit zumindest einen Antriebsmotor mit einem elektrisch vorgeordneten elektrischen Umrichter, einer Antriebssteuereinrichtung zum Erzeugen von Umrichtersteuersignalen zur Ansteuerung des Umrichters für einen Fahrbetrieb und einen Normalbremsbetrieb, und einer Wegfahrsperre, die elektrisch zwischen den Umrichter und die Antriebssteuereinrichtung geschaltet ist und dazu ausgebildet ist, bei einem Fahrzeughalt, insbesondere einem Halt an einer Haltestelle, eine Weiterleitung von Umrichtersteuersignalen, die einen Antriebsbetrieb des Antriebsmotors bewirken würden, in Richtung des Umrichters zu verhindern.

Derartige Fahrzeuge sind beispielsweise im Bereich der Eisenbahntechnik bekannt. Die Wegfahrsperre dient dazu, ein ungewünschtes Anfahren des Fahrzeugs an einer Haltestelle sicher zu verhindern. Z Dokument DE 10 2015 203303 A1 offenbart ein derartiges Fahrzeug,

Darüber hinaus ist bekannt, Schienenfahrzeuge im Normalbremsbetrieb mit Hilfe des Antriebsmotors zu bremsen, der während des Bremsbetriebs als Generator fungiert.

Der Erfindung liegt die Aufgabe zugrunde, ein bezüglich des Bremsens im Falle eines Schnellbremsbefehls verbessertes Fahrzeug anzugeben.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das Fahrzeug eine Ersatzregeleinrichtung und eine Überwachungseinrichtung aufweist und einen Sonderbremsmodus ermöglicht, der bei Vorliegen eines Schnellbremsbefehls aktivierbar ist und bei dem die Antriebssteuereinrichtung deaktiviert oder zumindest der Signalfluss von Umrichtersteuersignalen der Antriebssteuereinrichtung zur Wegfahrsperre unterbrochen wird, die Wegfahrsperre aktiviert wird und mit der Ersatzregeleinrichtung des Fahrzeugs Umrichtersteuersignale, die einen Bremstrieb des Antriebsmotors bewirken, über die Wegfahrsperre zum Umrichter übermittelt werden.

Ein wesentlicher Vorteil des erfindungsgemäßen Fahrzeugs ist darin zu sehen, dass auch im Falle eines Schnellbremsbefehls bzw. eines Schnellbremsvorgangs der Antriebsmotor als elektrische Bremse eingesetzt werden kann. Bei vorbekannten Fahrzeugen ist zwar prinzipiell auch ein Bremsen mit Hilfe des Antriebsmotors bei Vorliegen eines Schnellbremsbefehls möglich, jedoch wird von dieser Möglichkeit kein Gebrauch gemacht, da die Gefahr gesehen wird, dass im Falle einer Fehlfunktion der Antriebssteuereinrichtung der Antriebsmotor das Fahrzeug beschleunigen könnte anstatt zu bremsen. An dieser Stelle setzt die Erfindung an, indem erfindungsgemäß eine Ersatzregeleinrichtung vorgesehen wird, die im Falle des Vorliegens eines Schnellbremsbefehls aktivierbar ist und somit anstelle der Antriebssteuereinrichtung die Ansteuerung des Umrichters und damit die Ansteuerung des Antriebsmotors für einen sicheren Bremsbetrieb vornehmen kann.

Die Ersatzregeleinrichtung ist von der Antriebssteuereinrichtung vorzugsweise funktional getrennt und unabhängig von dieser.

Besonders einfach und vorteilhaft lässt sich die funktionale Trennung erreichen, wenn die Antriebssteuereinrichtung und die Ersatzregeleinrichtung durch funktional getrennte und voneinander unabhängige Softwaremodule gebildet werden, die von separaten Recheneinrichtungen oder derselben Recheneinrichtung ausgeführt werden.

Bei einer als besonders vorteilhaft angesehenen Ausführungsvariante ist vorgesehen, dass im Falle des Vorliegens des Schnellbremsbefehls zunächst die Antriebssteuereinrichtung die Schnellbremsung durchführt und Umrichtersteuersignale über die noch nicht aktivierte Wegfahrsperre zum Umrichter übermittelt und die Überwachungseinrichtung den Umrichterbetrieb und/oder die beim Umrichter eintreffenden Umrichtersteuersignale überwacht und derart ausgestaltet ist, dass sie bei Vorliegen des Schnellbremsbefehls und einem Antriebsbetrieb des Antriebsmotors den Sonderbremsmodus aktiviert, indem sie die Antriebssteuereinrichtung deaktiviert oder zumindest den Signalfluss von Umrichtersteuersignalen der Antriebssteuereinrichtung zur Wegfahrsperre unterbricht, die Wegfahrsperre aktiviert und die Ersatzregeleinrichtung zur Erzeugung von Umrichtersteuersignalen, die einen Bremstrieb des Antriebsmotors bewirken, aktiviert.

Bei der letztgenannten Variante ist es vorteilhaft, wenn die Überwachungseinrichtung anhand von im Umrichter oder Motor gemessenen oder für den Umrichter oder für den Motor berechneten Spannungen und Strömen bzw. daraus abgeleiteter Größen die Energieflussrichtung ermittelt und anhand dieser auf das Vorliegen eines Antriebsbetriebs schließt.

Bei einer weiteren als besonders vorteilhaft angesehenen Ausführungsvariante ist vorgesehen, dass die Überwachungseinrichtung das Vorliegen des Schnellbremsbefehls überwacht und bei Vorliegen des Schnellbremsbefehls unmittelbar die Antriebssteuereinrichtung deaktiviert oder zumindest den Signalfluss von Umrichtersteuersignalen der Antriebssteuereinrichtung zur Wegfahrsperre unterbricht, die Wegfahrsperre aktiviert und die Ersatzregeleinrichtung zur Erzeugung von Umrichtersteuersignalen, die einen Bremstrieb des Antriebsmotors bewirken, aktiviert.

Mit Blick auf eine funktionale Trennung der Komponenten wird es als vorteilhaft angesehen, wenn die Wegfahrsperre eine Hardwarekomponente aufweist oder durch eine Hardwarekomponente, insbesondere eine von der Antriebssteuereinrichtung und der Ersatzregeleinrichtung unabhängige Hardwarekomponente, gebildet ist.

Das Fahrzeug ist vorzugsweise ein Schienenfahrzeug.

Die Erfindung bezieht sich darüber hinaus auf ein Verfahren zum Betreiben eines Fahrzeugs bei Vorliegen eines Schnellbremsbefehls, wobei das Fahrzeug aufweist: zumindest einen Antriebsmotor mit einem elektrisch vorgeordneten elektrischen Umrichter, eine Antriebssteuereinrichtung zum Erzeugen von Umrichtersteuersignalen zur Ansteuerung des Umrichters für einen Fahrbetrieb und einen Normalbremsbetrieb, und eine Wegfahrsperre, die elektrisch zwischen den Umrichter und die Antriebssteuereinrichtung geschaltet ist und dazu ausgebildet ist, bei einem Fahrzeughalt, insbesondere einem Halt an einer Haltestelle, eine Weiterleitung von Umrichtersteuersignalen, die einen Antriebsbetrieb des Antriebsmotors bewirken würden, in Richtung des Umrichters zu verhindern.

Erfindungsgemäß ist vorgesehen, dass bei Vorliegen eines Schnellbremsbefehls unmittelbar oder erst bei einer Fehlfunktion der Antriebssteuereinrichtung ein Sonderbremsmodus aktiviert wird, bei dem die Antriebssteuereinrichtung deaktiviert oder zumindest der Signalfluss von Umrichtersteuersignalen der Antriebssteuereinrichtung zur Wegfahrsperre unterbrochen wird, die Wegfahrsperre aktiviert wird und mit einer Ersatzregeleinrichtung des Fahrzeugs Umrichtersteuersignale, die einen Bremstrieb des Antriebsmotors bewirken, über die Wegfahrsperre zum Umrichter übermittelt werden.

Bezüglich der Vorteile des erfindungsgemäßen Verfahrens und bezüglich vorteilhafter Ausgestaltungen des erfindungsgemäßen Verfahrens sei auf die obigen Ausführungen im Zusammenhang mit dem erfindungsgemäßen Fahrzeug und dessen vorteilhafter Ausgestaltungen verwiesen.

Die Ersatzregeleinrichtung und die Antriebssteuereinrichtung sind vorzugsweise funktional getrennt und werden vorzugsweise unabhängig voneinander betrieben.

Bei einer als besonders vorteilhaft angesehenen Ausführungsvariante ist vorgesehen, dass im im Falle des Vorliegens des Schnellbremsbefehls zunächst die Antriebssteuereinrichtung die Schnellbremsung durchführt und Umrichtersteuersignale über die noch nicht aktivierte Wegfahrsperre zum Umrichter übermittelt und mit einer Überwachungseinrichtung der Umrichterbetrieb und/oder die beim Umrichter eintreffenden Umrichtersteuersignale überwacht werden und bei Vorliegen des Schnellbremsbefehls und einem Antriebsbetrieb des Antriebsmotors ein Sonderbetriebsmodus aktiviert wird, bei dem die Antriebssteuereinrichtung deaktiviert oder zumindest der Signalfluss von Umrichtersteuersignalen der Antriebssteuereinrichtung zur Wegfahrsperre unterbrochen wird, die Wegfahrsperre aktiviert wird und die Ersatzregeleinrichtung zur Erzeugung von Umrichtersteuersignalen, die einen Bremstrieb des Antriebsmotors bewirken, aktiviert wird.

Bei einer weiteren als besonders vorteilhaft angesehenen Ausführungsvariante ist vorgesehen, dass bei Vorliegen des Schnellbremsbefehls unmittelbar die Antriebssteuereinrichtung deaktiviert oder zumindest der Signalfluss von Umrichtersteuersignalen der Antriebssteuereinrichtung zur Wegfahrsperre unterbrochen wird, die Wegfahrsperre aktiviert wird und mit einer Ersatzregeleinrichtung Umrichtersteuersignale, die einen Bremstrieb des Antriebsmotors bewirken, erzeugt werden.

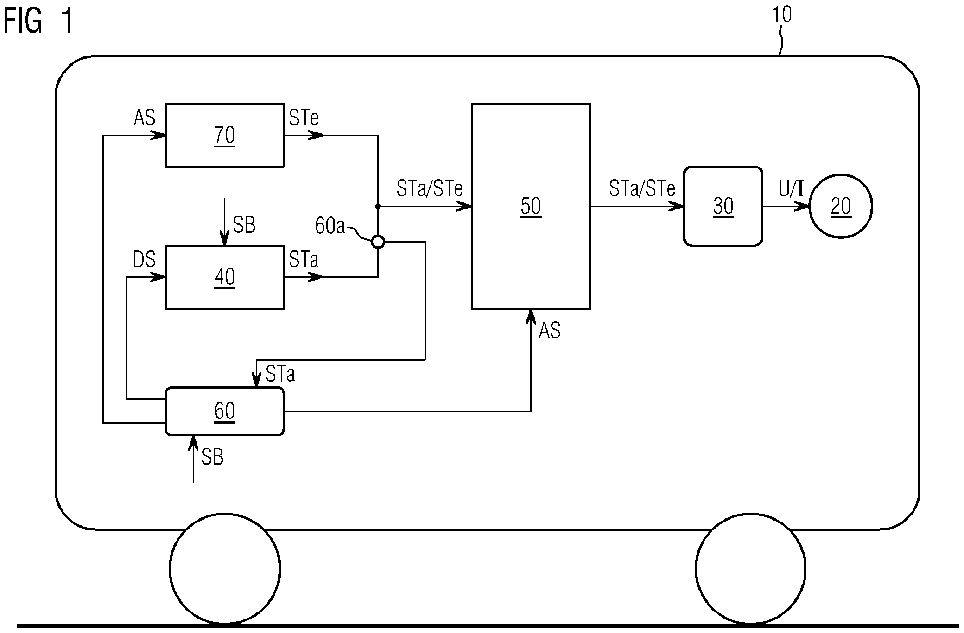

Die Erfindung wird nachfolgend anhand von Ausführungsbeispielen näher erläutert; dabei zeigen beispielhaft
- Fig. 1-5: Ausführungsbeispiele für erfindungsgemäße Fahrzeuge, anhand derer beispielhaft Ausführungsbeispiele für das erfindungsgemäße Verfahren erläutert werden, wobei bei den Ausführungsbeispielen gemäß den Figuren 1 bis 5 das Bremsen im Falle eines Schnellbremsbefehls zunächst mit der Antriebssteuereinrichtung erfolgt, und

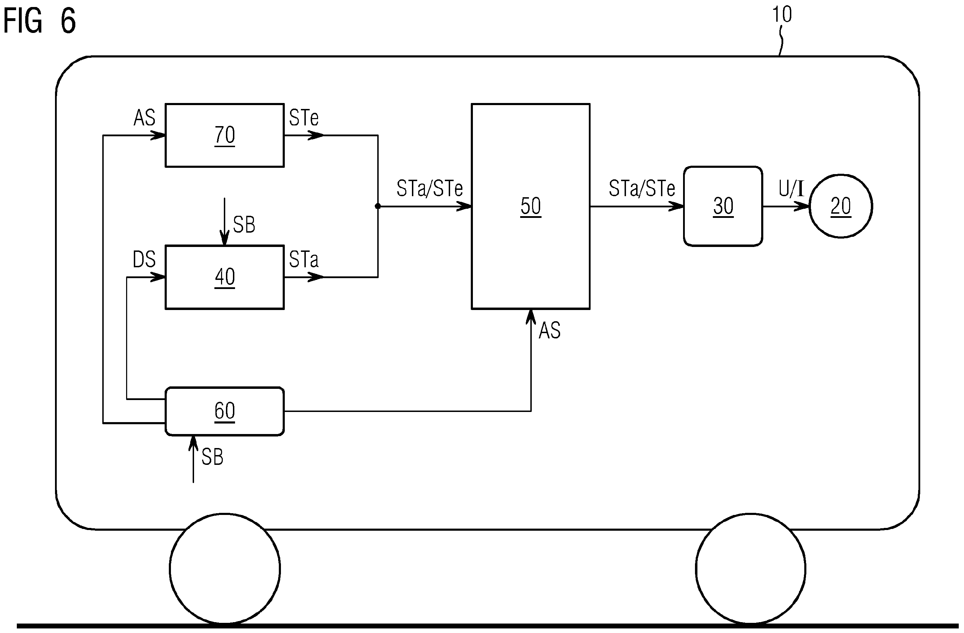

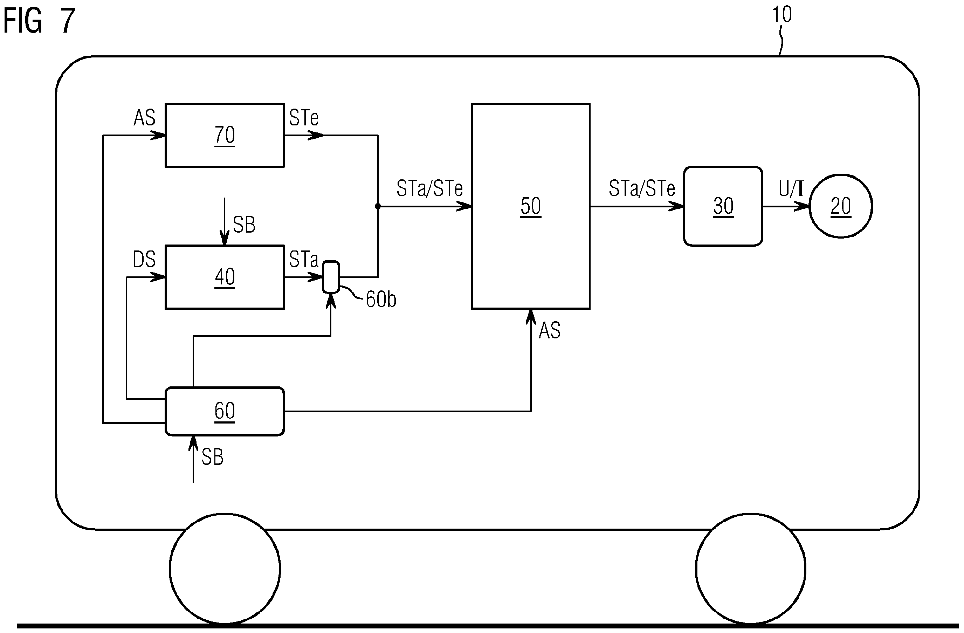

- Fig. 6-7: weitere Ausführungsbeispiele für erfindungsgemäße Fahrzeuge, anhand derer beispielhaft weitere Ausführungsbeispiele für das erfindungsgemäße Verfahren erläutert werden, wobei bei den Ausführungsbeispielen gemäß den Figuren 6 und 7 das Bremsen im Falle eines Schnellbremsbefehls sofort im Sonderbremsmodus beginnt.

In den Figuren werden für identische oder vergleichbare Komponenten stets dieselben Bezugszeichen verwendet.

Die Figur 1 zeigt ein Ausführungsbeispiel für ein Fahrzeug 10, das mit zumindest einem Antriebsmotor 20 und einem dem Antriebsmotor 20 elektrisch vorgeordneten elektrischen Umrichter 30 ausgestattet ist.

Eine Antriebssteuereinrichtung 40 des Fahrzeugs kann Umrichtersteuersignale STa erzeugen, die zur Ansteuerung des Umrichters 30 wahlweise für einen Fahrbetrieb oder einen Bremsbetrieb des Antriebsmotors 20 geeignet sind. Die Antriebssteuereinrichtung 40 kann somit - bei korrekter Arbeitsweise - zur Ansteuerung des Umrichters 30 auch im Falle eines Schnellbremsbetriebs bei Vorliegen eines Schnellbremsbefehls SB dienen.

Die Antriebssteuereinrichtung 40 ist bei dem Ausführungsbeispiel gemäß Figur 1 mit dem Umrichter 30 nicht unmittelbar verbunden, sondern von diesem durch eine Wegfahrsperre 50 getrennt. Die Wegfahrsperre 50 ist elektrisch zwischen den Umrichter 30 und die Antriebssteuereinrichtung 40 geschaltet und dient dazu, bei einem Fahrzeughalt, insbesondere einem Halt an einer Haltestelle, eine Weiterleitung von Umrichtersteuersignalen STa, die einen Antriebsbetrieb des Antriebsmotors 20 bewirken würden, in Richtung des Umrichters 30 zu verhindern. Die Wegfahrsperre 50 bildet somit eine Sicherheitseinrichtung für den Fall, dass bei einem Fahrzeughalt an einer Haltestelle eine defekte Antriebssteuereinrichtung 40 Umrichtersteuersignale STa zu dem Umrichter 30 leiten kann, die zu einem ungewünschten und unter Umständen gefährlichen Fahrbetrieb führen würden. Die Wegfahrsperre 50 kann im Falle eines Fahrzeughalts an einer Haltestelle, beispielsweise einem Bahnhof, aktiviert werden, zum Beispiel von einem Fahrzeugführer.

Das Fahrzeug 10 ist außerdem mit einer Überwachungseinrichtung 60 ausgestattet, die die von der Antriebssteuereinrichtung 40 erzeugten und beim Umrichter 30 eintreffenden Umrichtersteuersignale STa überwacht. Um dies zu ermöglichen, ist die Überwachungseinrichtung 60 bei dem Ausführungsbeispiel gemäß Figur 1 mit einem Überwachungsmodul 60a verbunden, das im Signalpfad zwischen der Antriebssteuereinrichtung 40 und der Wegfahrsperre 50 angeordnet ist und die Umrichtersteuersignale STa zur Überwachungseinrichtung 60 weiterleitet.

Das Fahrzeug 10 ist außerdem mit einer Ersatzregeleinrichtung 70 ausgestattet, die dazu ausgebildet ist, Umrichtersteuersignale STe zu erzeugen, die ausschließlich bzw. mit hohem Sicherheitsniveau ausschließlich einen Bremstrieb des Antriebsmotors 20, also keinen Antriebsbetrieb, bewirken oder zumindest bewirken können sollen. Während also die Antriebssteuereinrichtung 40 sowohl für einen Fahr- als auch für einen Bremsbetrieb genutzt werden kann, ist die Ersatzregeleinrichtung 70 nur für den Bremsbetrieb ausgelegt bzw. geeignet.

Die Antriebssteuereinrichtung 40, die Überwachungseinrichtung 60 und die Ersatzregeleinrichtung 70 ermöglichen bei dem Ausführungsbeispiel gemäß Figur 1 einen Sonderbremsmodus, der bei Vorliegen eines Schnellbremsbefehls SB aktiviert werden kann; die Antriebssteuereinrichtung 40, die Überwachungseinrichtung 60 und die Ersatzregeleinrichtung 70 werden bei Vorliegen eines Schnellbremsbefehls SB vorzugsweise wie folgt betrieben:
Liegt der Schnellbremsbefehl SB vor, so wird zunächst die Antriebssteuereinrichtung 40 die Schnellbremsung durchführen und zu diesem Zwecke "bremsende" Umrichtersteuersignale STa über die noch nicht aktivierte Wegfahrsperre 50 zum Umrichter 30 übermitteln.

Die Überwachungseinrichtung 60 überwacht mittels des Überwachungsmoduls 60a die von der Antriebssteuereinrichtung 40 erzeugten und beim Umrichter 30 eintreffenden Umrichtersteuersignale STa. Stellt sie im Rahmen dieser Überwachung fest, dass trotz des Vorliegens des Schnellbremsbefehls SB die Antriebssteuereinrichtung 40 "antreibende" Umrichtersteuersignale STa erzeugt und somit einen Antriebsbetrieb des Antriebsmotors 20 ansteuert, so deaktiviert sie die Antriebssteuereinrichtung 40 mit einem Deaktivierungssignal DS und aktiviert die Wegfahrsperre 50 mit einem Aktivierungssignal AS. Außerdem aktiviert sie mit einem Aktivierungssignal AS die Ersatzregeleinrichtung 70, die nun anstelle der deaktivierten Antriebssteuereinrichtung 40 Umrichtersteuersignale STe, die einen Bremstrieb des Antriebsmotors 20 bewirken sollen, erzeugt.

Da die Ersatzregeleinrichtung 70 technisch nur zur Erzeugung von Umrichtersteuersignalen STe für einen Bremstrieb des Antriebsmotors 20 ausgelegt ist, wird mit hoher Wahrscheinlichkeit sichergestellt, dass ein Antriebsbetrieb des Antriebsmotors 20 bei Vorliegen des Schnellbremsbefehls SB ausgeschlossen ist.

Bei dem Ausführungsbeispiel gemäß Figur 1 wird also zusammengefasst die Schnellbremsung bei Vorliegen eines Schnellbremsbefehls SB zunächst von der Antriebssteuereinrichtung 40 durchgeführt, und es erfolgt ein Umschalten auf die Ersatzregeleinrichtung 70 nur bzw. erst dann, wenn die Antriebssteuereinrichtung 40 falsche, also nicht bremsende oder sogar antreibende Umrichtersteuersignale STa erzeugt.

Die Ersatzregeleinrichtung 70 ist von der Antriebssteuereinrichtung 40 vorzugsweise funktional getrennt und unabhängig von dieser.

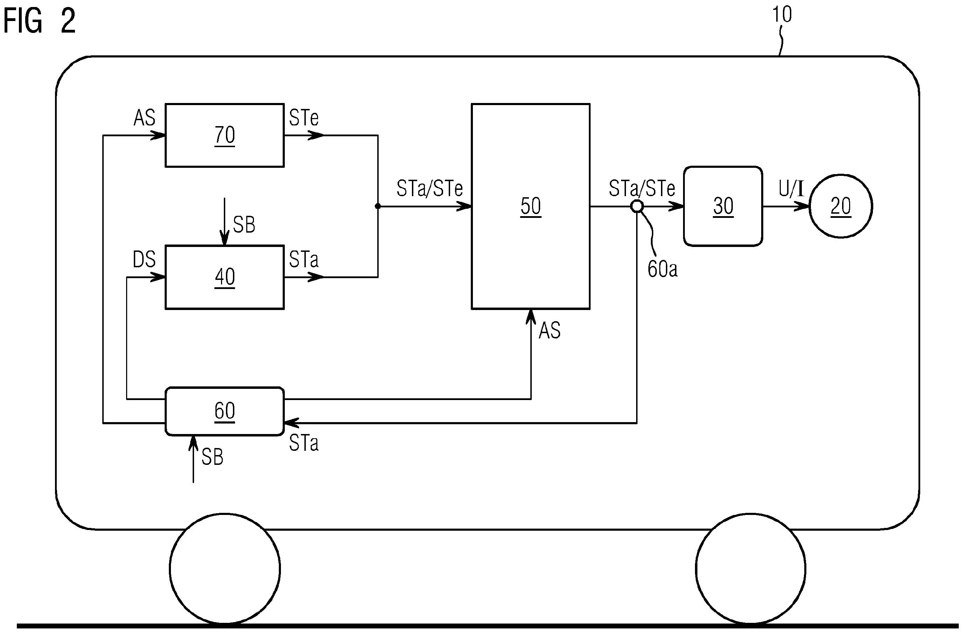

Die Figur 2 zeigt eine Ausführungsvariante des Fahrzeugs 10 gemäß Figur 1. Bei dem Ausführungsbeispiel gemäß Figur 2 ist das Überwachungsmodul 60a im Signalpfad zwischen der Wegfahrsperre 50 und dem Umrichter 30 angeordnet ist und leitet die Umrichtersteuersignale STa von dort zur Überwachungseinrichtung 60 weiter. Im Übrigen gelten die obigen Ausführungen im Zusammenhang mit der Figur 1 entsprechend.

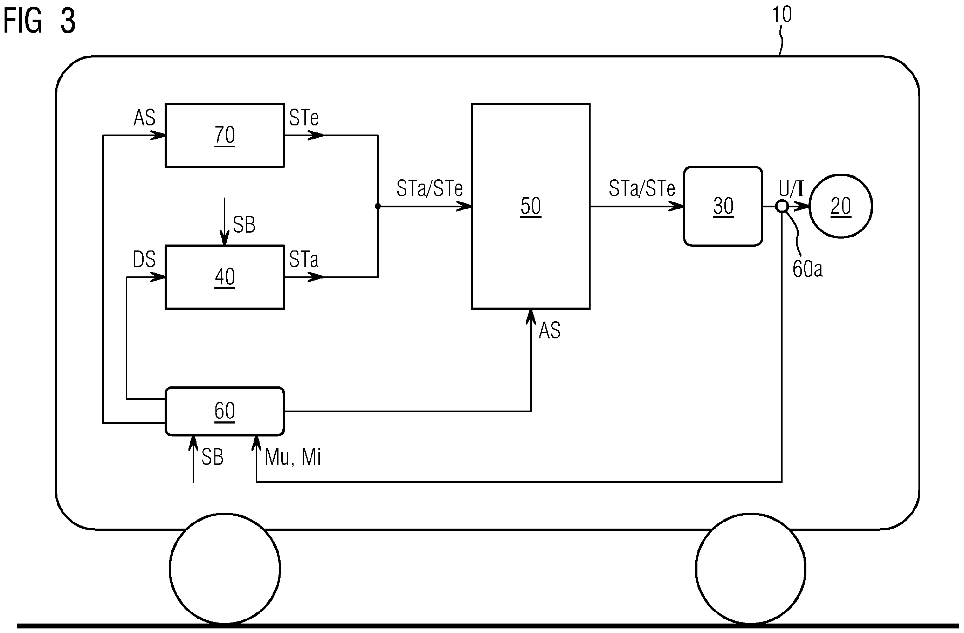

Die Figur 3 zeigt eine weitere Ausführungsvariante des Fahrzeugs 10 gemäß Figur 1. Bei dem Ausführungsbeispiel gemäß Figur 3 überwacht das Überwachungsmodul 60a nicht die Umrichtersteuersignale STa der Antriebssteuereinrichtung 40, sondern stattdessen die im Umrichter 30 und/oder Antriebsmotor 20 fließenden Ströme I unter Bildung von Strommesswerten Mi sowie die im Umrichter 30 und/oder Antriebsmotor 20 anliegenden Spannungen U unter Bildung von Spannungsmesswerten Mu und leitet die Messwerte Mu und Mi an die Überwachungseinrichtung 60 weiter.

Die Überwachungseinrichtung 60 kann somit anhand der Messwerte Mu und Mi oder daraus abgeleiteter Größen, wie beispielsweise Stromzeigern oder Spannungszeigern, die Energieflussrichtung bestimmen und anhand der jeweiligen Energieflussrichtung auf einen Antriebsbetrieb oder Bremsbetrieb schlie-ßen.

Alternativ oder zusätzlich kann die Überwachungseinrichtung 60 die Messwerte Mu und Mi oder daraus abgeleitete Größen indirekt aus anderen Quellen erhalten, die diese Messwerte ebenfalls verarbeiten oder berechnen. In diesem Fall kann das Überwachungsmodul 60a auch wegfallen.

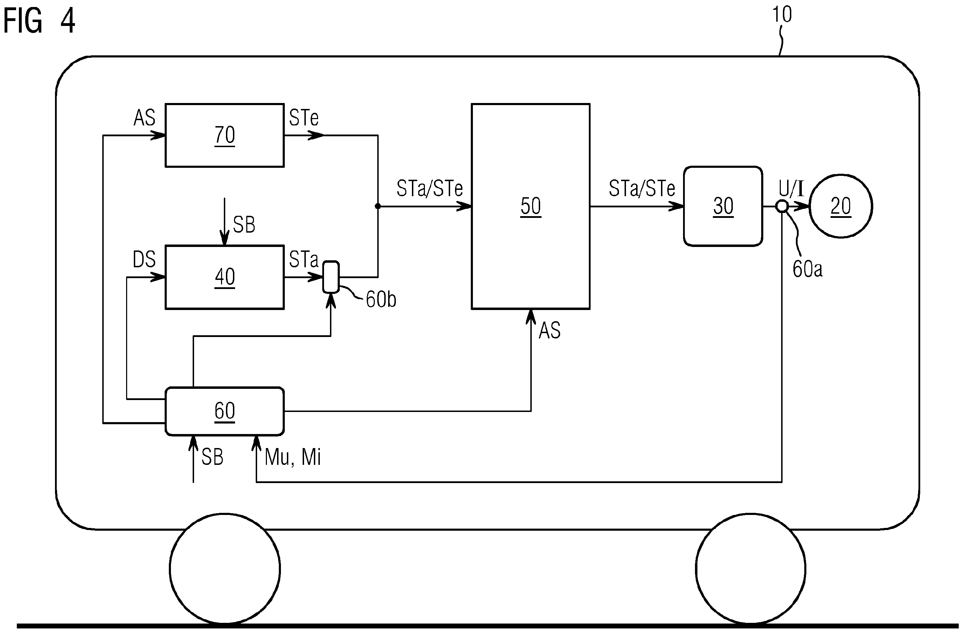

Die Figur 4 zeigt eine Ausführungsvariante des Ausführungsbeispiels gemäß Figur 2. Bei dem Ausführungsbeispiel gemäß Figur 4 ist die Überwachungseinrichtung 60 mit einer Unterbrechereinheit 60b verbunden, die in die Verbindungsleitung zwischen der Antriebssteuereinrichtung 40 und der Wegfahrsperre 50 geschaltet ist.

Stellt die Überwachungseinrichtung 60 einen Antriebsbetrieb des Antriebsmotors 20 trotz Vorliegen des Schnellbremsbefehls SB fest, beispielsweise anhand der ermittelten Energieflussrichtung, so aktiviert sie die Unterbrechereinheit 60b und unterbricht somit eine Weiterleitung der Umrichtersteuersignale STa, die von der Antriebssteuereinrichtung 40 ausgangsseitig in Richtung der Wegfahrsperre 50 ausgegeben werden.

Bei der Ausführungsvariante gemäß der Figur 4 kann die Unterbrechereinheit 60b alternativ oder zusätzlich zu einer Deaktivierung der Antriebssteuereinrichtung 40 mittels des Deaktivierungssignals DS vorgesehen sein.

Im Übrigen gelten die obigen Ausführungen im Zusammenhang mit den Figuren 1 bis 3 entsprechend.

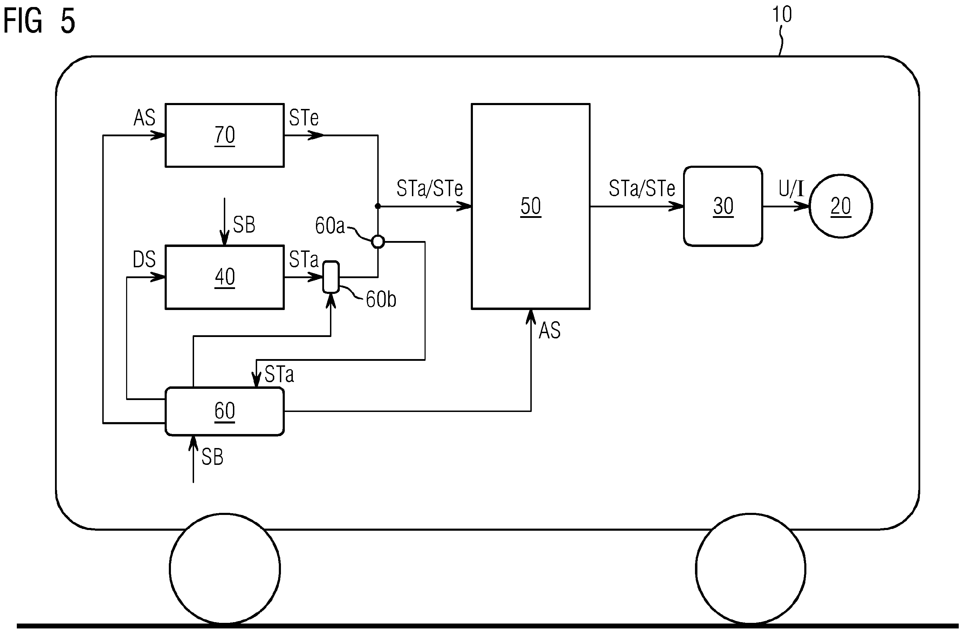

Die Figur 5 zeigt eine Ausführungsvariante des Ausführungsbeispiels gemäß Figur 1. Bei dem Ausführungsbeispiel gemäß Figur 5 ist eine Unterbrechereinheit 60b in Signalflussrichtung vor das Überwachungsmodul 60a geschaltet. Dies ermöglicht es der Überwachungseinrichtung 60, nach einer Aktivierung der Unterbrechereinheit 60b zu überprüfen, dass tatsächlich keine Umrichtersteuersignale STa mehr von der Antriebssteuereinrichtung 40 zur Wegfahrsperre 50 gelangen. Das Abschalten des Signalflusses der Antriebssteuereinrichtung 40 in Richtung der Wegfahrsperre 50 durch die Unterbrechereinheit 60b kann somit mit dem Überwachungsmodul 60a überwacht werden, sodass dieses in vorteilhafter Weise eine Doppelfunktion ausübt.

Bei der Ausführungsvariante gemäß der Figur 5 kann die Unterbrechereinheit 60b alternativ oder zusätzlich zu einer Deaktivierung der Antriebssteuereinrichtung 40 mittels des Deaktivierungssignals DS vorgesehen sein.

Im Übrigen gelten die obigen Ausführungen im Zusammenhang mit den Figuren 1 bis 4 entsprechend.

Die Figur 6 zeigt ein weiteres Ausführungsbeispiel für ein Fahrzeug 10, bei dem ein Sonderbetriebsmodus bei Vorliegen eines Schnellbremsbefehls SB ermöglicht wird. Im Unterschied zu den Ausführungsbeispielen gemäß den Figuren 1 bis 5 überwacht die Überwachungseinrichtung 60 lediglich das Vorligen eines Schnellbremsbefehls SB und aktiviert bei Vorliegen des Schnellbremsbefehls SB den Sonderbremsmodus sofort.

Das Fahrzeug 10 gemäß Figur 6 wird vorzugsweise wie folgt betrieben:
Sobald ein Schnellbremsbefehl SB bei der Überwachungseinrichtung 60 eingeht, so deaktiviert diese unmittelbar mittels eines Deaktivierungssignals DS die Antriebssteuereinrichtung 40 und aktiviert unmittelbar mit Aktivierungssignalen AS die Ersatzregeleinrichtung 70 und die Wegfahrsperre 50.

Bei dem Ausführungsbeispiel gemäß Figur 6 beginnt der Schnellbremsmodus also nicht zunächst durch eine Ansteuerung des Antriebs 20 mittels der Antriebssteuereinrichtung 40, sondern unmittelbar durch eine Erzeugung von Umrichtersteuersignalen STe mittels der Ersatzregeleinrichtung 70, die die Antriebssteuereinrichtung 40 bei Vorliegen des Schnellbremsbefehls SB unmittelbar bzw. sofort ersetzt.

Die Figur 7 zeigt eine Ausführungsvariante des Ausführungsbeispiels gemäß Figur 6. Bei der Ausführungsvariante gemäß Figur 7 ist eine zusätzliche Unterbrechereinheit 60b vorgesehen, die im Signalpfad zwischen der Antriebssteuereinrichtung 40 und der Wegfahrsperre 50 angeordnet ist.

Sobald bei der Überwachungseinrichtung 60 ein Schnellbremsbefehl SB eingeht, aktiviert die Überwachungseinrichtung 60 die Unterbrechereinheit 60b, sodass eine Übermittlung von Umrichtersteuersignalen STa von der Antriebssteuereinrichtung 40 in Richtung der Wegfahrsperre 50 sicher unterbunden wird, unabhängig davon, ob diese noch aktiv ist oder nicht.

Im Übrigen gelten die obigen Ausführungen im Zusammenhang mit den Figuren 1 bis 6 entsprechend.

### Bezugszeichenliste

- 10: Fahrzeug
- 20: Antriebsmotor
- 30: Umrichter
- 40: Antriebssteuereinrichtung
- 50: Wegfahrsperre
- 60: Überwachungseinrichtung
- 60a: Überwachungsmodul
- 60b: Unterbrechereinheit
- 70: Ersatzregeleinrichtung

- AS: Aktivierungssignal
- DS: Deaktivierungssignal
- I: Ströme
- Mi: Strommesswerte
- Mu: Spannungsmesswerte
- SB: Schnellbremsbefehl
- STa: Umrichtersteuersignal
- STe: Umrichtersteuersignal
- U: Spannungen

## Patentansprüche

1. Fahrzeug (10) mit
- zumindest einen Antriebsmotor (20) mit einem elektrisch vorgeordneten elektrischen Umrichter (30),
- einer Antriebssteuereinrichtung (40) zum Erzeugen von Umrichtersteuersignalen (STa) zur Ansteuerung des Umrichters (30) für einen Fahrbetrieb und einen Normalbremsbetrieb, und
- einer Wegfahrsperre (50), die elektrisch zwischen den Umrichter (30) und die Antriebssteuereinrichtung (40) geschaltet ist und dazu ausgebildet ist, bei einem Fahrzeughalt, insbesondere einem Halt an einer Haltestelle, eine Weiterleitung von Umrichtersteuersignalen (STa), die einen Antriebsbetrieb des Antriebsmotors (20) bewirken würden, in Richtung des Umrichters (30) zu verhindern,
**dadurch gekennzeichnet, dass**
das Fahrzeug (10) eine Ersatzregeleinrichtung (70) und eine Überwachungseinrichtung (60) aufweist und einen Sonderbremsmodus ermöglicht, der bei Vorliegen eines Schnellbremsbefehls (SB) aktivierbar ist und bei dem
- die Antriebssteuereinrichtung (40) deaktiviert oder zumindest der Signalfluss von Umrichtersteuersignalen (STa) der Antriebssteuereinrichtung (40) zur Wegfahrsperre (50) unterbrochen wird,
- die Wegfahrsperre (50) aktiviert wird und
- mit der Ersatzregeleinrichtung (70) des Fahrzeugs (10) Umrichtersteuersignale (STe), die einen Bremstrieb des Antriebsmotors (20) bewirken, über die Wegfahrsperre (50) zum Umrichter (30) übermittelt werden.

2. Fahrzeug (10) nach Anspruch 1,
**dadurch gekennzeichnet, dass**
die Ersatzregeleinrichtung (70) von der Antriebssteuereinrichtung (40) funktional getrennt und unabhängig von dieser ist.

3. Fahrzeug (10) nach einem der voranstehenden Ansprüche,
**dadurch gekennzeichnet, dass**
die Antriebssteuereinrichtung (40) und die Ersatzregeleinrichtung (70) durch funktional getrennte und voneinander unabhängige Softwaremodule gebildet werden, die von separaten Recheneinrichtungen oder derselben Recheneinrichtung ausgeführt werden.

4. Fahrzeug (10) nach einem der voranstehenden Ansprüche,
**dadurch gekennzeichnet, dass**
- im Falle des Vorliegens des Schnellbremsbefehls (SB) zunächst die Antriebssteuereinrichtung (40) die Schnellbremsung durchführt und Umrichtersteuersignale (STa) über die noch nicht aktivierte Wegfahrsperre (50) zum Umrichter (30) übermittelt werden, und
- die Überwachungseinrichtung (60) den Umrichterbetrieb und/oder die beim Umrichter (30) eintreffenden Umrichtersteuersignale (STa) überwacht und derart ausgestaltet ist, dass sie bei Vorliegen des Schnellbremsbefehls (SB) und einem Antriebsbetrieb des Antriebsmotors (20) den Sonderbremsmodus aktiviert, indem sie
- die Antriebssteuereinrichtung (40) deaktiviert oder zumindest den Signalfluss von Umrichtersteuersignalen (STa) der Antriebssteuereinrichtung (40) zur Wegfahrsperre (50) unterbricht,
- die Wegfahrsperre (50) aktiviert und
- die Ersatzregeleinrichtung (70) zur Erzeugung von Umrichtersteuersignalen (STe), die einen Bremstrieb des Antriebsmotors (20) bewirken, aktiviert.

5. Fahrzeug (10) nach Anspruch 4,
**dadurch gekennzeichnet, dass**
die Überwachungseinrichtung (60) anhand von im Umrichter (30) oder Motor gemessenen oder für den Umrichter (30) oder für den Motor berechneten Spannungen (U) und Strömen (I) bzw. daraus abgeleiteter Größen die Energieflussrichtung und mit dieser einen Antriebsbetrieb ermittelt.

6. Fahrzeug (10) nach einem der voranstehenden Ansprüche 1 bis 3,
**dadurch gekennzeichnet, dass**
die Überwachungseinrichtung (60) das Vorliegen des Schnellbremsbefehls (SB) überwacht und bei Vorliegen des Schnellbremsbefehls (SB) unmittelbar
- die Antriebssteuereinrichtung (40) deaktiviert oder zumindest den Signalfluss von Umrichtersteuersignalen (STa) der Antriebssteuereinrichtung (40) zur Wegfahrsperre (50) unterbricht,
- die Wegfahrsperre (50) aktiviert und
- die Ersatzregeleinrichtung (70) zur Erzeugung von Umrichtersteuersignalen (STe), die einen Bremstrieb des Antriebsmotors (20) bewirken, aktiviert.

7. Fahrzeug (10) nach einem der voranstehenden Ansprüche,
**dadurch gekennzeichnet, dass**
die Wegfahrsperre (50) eine Hardwarekomponente aufweist oder durch eine Hardwarekomponente, insbesondere eine von der Antriebssteuereinrichtung (40) und der Ersatzregeleinrichtung (70) unabhängige Hardwarekomponente, gebildet ist.

8. Fahrzeug (10) nach einem der voranstehenden Ansprüche,
**dadurch gekennzeichnet, dass**
das Fahrzeug ein Schienenfahrzeug ist.

9. Verfahren zum Betreiben eines Fahrzeugs (10) bei Vorliegen eines Schnellbremsbefehls (SB), wobei das Fahrzeug (10) aufweist
- zumindest einen Antriebsmotor (20) mit einem elektrisch vorgeordneten elektrischen Umrichter (30),
- eine Antriebssteuereinrichtung (40) zum Erzeugen von Umrichtersteuersignalen (STa) zur Ansteuerung des Umrichters (30) für einen Fahrbetrieb und einen Normalbremsbetrieb und
- eine Wegfahrsperre (50), die elektrisch zwischen den Umrichter (30) und die Antriebssteuereinrichtung (40) geschaltet ist und dazu ausgebildet ist, bei einem Fahrzeughalt, insbesondere einem Halt an einer Haltestelle, eine Weiterleitung von Umrichtersteuersignalen (STa), die einen Antriebsbetrieb des Antriebsmotors (20) bewirken würden, in Richtung des Umrichters (30) zu verhindern,
**dadurch gekennzeichnet, dass**
bei Vorliegen eines Schnellbremsbefehls (SB) unmittelbar oder erst bei einer Fehlfunktion der Antriebssteuereinrichtung (40) ein Sonderbremsmodus aktiviert wird, bei dem
- die Antriebssteuereinrichtung (40) deaktiviert oder zumindest der Signalfluss von Umrichtersteuersignalen (STa) der Antriebssteuereinrichtung (40) zur Wegfahrsperre (50) unterbrochen wird,
- die Wegfahrsperre (50) aktiviert wird und
- mit einer Ersatzregeleinrichtung (70) des Fahrzeugs (10) Umrichtersteuersignale (STe), die einen Bremstrieb des Antriebsmotors (20) bewirken, über die Wegfahrsperre (50) zum Umrichter (30) übermittelt werden.

10. Verfahren nach Anspruch 9,
**dadurch gekennzeichnet, dass**
die Ersatzregeleinrichtung (70) und die Antriebssteuereinrichtung (40) funktional getrennt und unabhängig voneinander betrieben werden.

11. Verfahren nach einem der voranstehenden Ansprüche 9 bis 10,
**dadurch gekennzeichnet, dass**
- im Falle des Vorliegens des Schnellbremsbefehls (SB) zunächst die Antriebssteuereinrichtung (40) die Schnellbremsung durchführt und Umrichtersteuersignale (STa) über die noch nicht aktivierte Wegfahrsperre (50) zum Umrichter (30) übermittelt werden, und
- mit einer Überwachungseinrichtung (60) der Umrichterbetrieb und/oder die beim Umrichter (30) eintreffenden Umrichtersteuersignale (STa) überwacht werden und bei Vorliegen des Schnellbremsbefehls (SB) und einem Antriebsbetrieb des Antriebsmotors (20) ein Sonderbetriebsmodus aktiviert wird, bei dem
- die Antriebssteuereinrichtung (40) deaktiviert oder zumindest der Signalfluss von Umrichtersteuersignalen (STa) der Antriebssteuereinrichtung (40) zur Wegfahrsperre (50) unterbrochen wird,
- die Wegfahrsperre (50) aktiviert wird und
- die Ersatzregeleinrichtung (70) zur Erzeugung von Umrichtersteuersignalen (STe), die einen Bremstrieb des Antriebsmotors (20) bewirken, aktiviert wird.

12. Verfahren nach einem der voranstehenden Ansprüche 9 bis 10,
**dadurch gekennzeichnet, dass**
bei Vorliegen des Schnellbremsbefehls (SB) unmittelbar
- die Antriebssteuereinrichtung (40) deaktiviert oder zumindest der Signalfluss von Umrichtersteuersignalen (STa) der Antriebssteuereinrichtung (40) zur Wegfahrsperre (50) unterbrochen wird,
- die Wegfahrsperre (50) aktiviert wird und
- mit einer Ersatzregeleinrichtung (70) Umrichtersteuersignale (STe), die einen Bremstrieb des Antriebsmotors (20) bewirken, erzeugt werden.

## Claims

1. Vehicle (10) with
- at least one drive motor (20) with an electrically upstream electric converter (30),
- a drive controller (40) for generating converter control signals (STa) for actuating the converter (30) for a driving operation and a normal braking operation, and
- an immobiliser (50) which is electrically connected between the converter (30) and the drive controller (40) and which is designed to prevent converter control signals (STa), which would produce a driving operation of the drive motor (20), from being forwarded in the direction of the converter (30) when the vehicle is stopped, in particular at a stop,
**characterised in that**
the vehicle (10) has an alternate regulating device (70) and a monitoring device (60) and allows a special braking mode which can be activated in the presence of a quick-acting brake command (SB) and in the event of which
- the drive controller (40) is deactivated or at least the signal flow of converter control signals (STa) of the drive controller (40) to the immobiliser (50) is interrupted,
- the immobiliser (50) is activated, and
- converter control signals (STe) which produce a braking operation of the drive motor (20) are transmitted to the converter (30) via the immobiliser (50) by the alternate regulating device (70) of the vehicle (10).

2. Vehicle (10) according to claim 1,
**characterised in that**
the alternate regulating device (70) is functionally separate from the drive controller (40) and is independent of it.

3. Vehicle (10) according to one of the preceding claims,
**characterised in that**
the drive controller (40) and the alternate regulating device (70) are formed by functionally separate software modules which are independent of each other and which are executed by separate computing devices or the same computing device.

4. Vehicle (10) according to one of the preceding claims, **characterised in that**
- in the case of the presence of the quick-acting brake command (SB), firstly the drive controller (40) carries out the quick-acting braking and converter control signals (STa) are transmitted to the converter (30) via the not yet activated immobiliser (50), and
- the monitoring device (60) monitors the converter operation and/or the converter control signals (STa) arriving at the converter (30) and is configured in such a way that in the presence of the quick-acting brake command (SB) and a driving operation of the drive motor (20) it activates the special braking mode by
- deactivating the drive controller (40) or at least interrupting the signal flow of converter control signals (STa) of the drive controller (40) to the immobiliser (50),
- activating the immobiliser (50) and
- activating the alternate regulating device (70) for generation of converter control signals (STe), which produce a braking operation of the drive motor (20).

5. Vehicle (10) according to claim 4,
**characterised in that**
the monitoring device (60) ascertains on the basis of voltages (U) and currents (I) measured in the converter (30) or motor or calculated for the converter (30) or for the motor or variables derived therefrom, the energy flow direction and therewith a driving operation.

6. Vehicle (10) according to one of the preceding claims 1 to 3,
**characterised in that**
the monitoring device (60) monitors the presence of the quick-acting brake command (SB) and in the presence of the quick-acting brake command (SB) immediately
- deactivates the drive controller (40) or at least interrupts the signal flow of converter control signals (STa) of the drive controller (40) to the immobiliser (50),
- activates the immobiliser (50) and
- activates the alternate regulating device (70) for generation of converter control signals (STe), which produce a braking operation of the drive motor (20).

7. Vehicle (10) according to one of the preceding claims,
**characterised in that**
the immobiliser (50) has a hardware component or is formed by a hardware component, in particular a hardware component independent of the drive controller (40) and the alternate regulating device (70).

8. Vehicle (10) according to one of the preceding claims,
**characterised in that**
the vehicle is a rail vehicle.

9. Method for operating a vehicle (10) in the presence of a quick-acting brake command (SB), wherein the vehicle (10) has
- at least one drive motor (20) with an electrically upstream electric converter (30),
- a drive controller (40) for generating converter control signals (STa) for actuating the converter (30) for a driving operation and a normal braking operation, and
- an immobiliser (50) which is electrically connected between the converter (30) and the drive controller (40) and which is designed to prevent converter control signals (STa), which would produce a driving operation of the drive motor (20), from being forwarded in the direction of the converter (30) when the vehicle is stopped, in particular at a stop,
**characterised in that**
in the presence of a quick-acting brake command (SB) a special braking mode is activated immediately or only when the drive controller (40) malfunctions, wherein
- the drive controller (40) is deactivated or at least the signal flow of converter control signals (STa) of the drive controller (40) to the immobiliser (50) is interrupted,
- the immobiliser (50) is activated and
- with an alternate regulating device (70) of the vehicle (10), converter control signals (STe), which produce a braking operation of the drive motor (20), are transmitted to the converter (30) via the immobiliser (50).

10. Method according to claim 9,
**characterised in that**
the alternate regulating device (70) and the drive controller (40) are functionally separate and are operated independently of each other.

11. Method according to one of the preceding claims 9 to 10, **characterised in that**
- in the case of the presence of the quick-acting brake command (SB), firstly the drive controller (40) carries out the quick-acting braking and converter control signals (STa) are transmitted to the converter (30) via the not yet activated immobiliser (50), and
- with a monitoring device (60), the converter operation and/or the converter control signals (STa) arriving at the converter (30) are monitored and in the presence of the quick-acting brake command (SB) and a driving operation of the drive motor (20) a special operating mode is activated, wherein
- the drive controller (40) is deactivated or at least the signal flow of converter control signals (STa) of the drive controller (40) to the immobiliser (50) is interrupted,
- the immobiliser (50) is activated, and
- the alternate regulating device (70) is activated for generation of converter control signals (STe), which produce a braking operation of the drive motor (20).

12. Method according to one of the preceding claims 9 to 10,
**characterised in that**
immediately in the presence of a quick-acting brake command (SB)
- the drive controller (40) is deactivated or at least the signal flow of converter control signals (STa) of the drive controller (40) to the immobiliser (50) is interrupted,
- the immobiliser (50) is activated, and
- converter control signals (STe), which produce a braking operation of the drive motor (20), are generated with an alternate regulating device (70).

## Revendications

1. Véhicule (10) comprenant
- au moins un moteur (20) de traction avec un convertisseur (30) électrique monté en amont électriquement,
- un dispositif (40) de commande de la traction pour la production de signaux (STa) de commande du convertisseur pour la commande du convertisseur (30) pour un fonctionnement en circulation et un fonctionnement en freinage normal, et
- un dispositif (50) d'antidémarrage, qui est monté électriquement entre le convertisseur (30) et le dispositif (40) de commande de la traction et qui est constitué pour empêcher, si le véhicule s'arrête, en particulier s'il s'arrête à un arrêt, un acheminement en direction du convertisseur (30) de signaux (STa) de commande du convertisseur, qui auraient provoqué un fonctionnement en traction du moteur (20) de traction,
**caractérisé en ce que**
le véhicule (10) a un dispositif (70) de réglage de remplacement et un dispositif (60) de contrôle et rend possible un mode de freinage particulier, qui peut être activé en présence d'une instruction (SB) de freinage rapide, et dans lequel
- le dispositif (40) de commande de la traction est désactivé ou au moins le flux de signaux (STa) de commande du convertisseur du dispositif (40) de commande de la traction au dispositif (50) d'antidémarrage est interrompu,
- le dispositif (50) d'antidémarrage est activé, et
- par le dispositif (70) de réglage de remplacement du véhicule (10), des signaux (STe) de commande du convertisseur, qui provoquent un fonctionnement en freinage du moteur (20) de traction sont transmis au convertisseur (30) par le dispositif (50) d'antidémarrage.

2. Véhicule (10) suivant la revendication 1,
**caractérisé en ce que**
le dispositif (70) de réglage de remplacement est séparé fonctionnellement du dispositif (40) de commande de la traction et est indépendant de celui-ci.

3. Véhicule (10) suivant l'une des revendications précédentes, **caractérisé en ce que**
le dispositif (40) de commande de la traction et le dispositif (70) de réglage de remplacement sont formés de modules logiciels séparés fonctionnellement et indépendants l'un de l'autre, qui sont réalisés par des dispositifs informatiques distincts ou par le même dispositif informatique.

4. Véhicule (10) suivant l'une des revendications précédentes, **caractérisé en ce que**
- dans le cas de la présence de l'instruction (SB) de freinage rapide, le dispositif (40) de commande de la traction effectue d'abord le freinage rapide et des signaux (STa) de commande de convertisseur sont transmis au convertisseur (30) par le dispositif (50) d'antidémarrage, qui n'est pas encore activé, et
- le dispositif (60) de contrôle contrôle le fonctionnement du convertisseur et/ou les signaux (STa) de commande du convertisseur arrivant au convertisseur (30) et est conformé de manière à activer, en la présence de l'instruction (SB) de freinage rapide et d'un fonctionnement en traction du moteur (20) de traction, le mode de freinage particulier en
- désactivant le dispositif (40) de commande de l'entraînement ou du moins en interrompant le flux de signal de signaux (STa) de commande de convertisseur du dispositif (40) de commande de la traction au dispositif (50) d'antidémarrage,
- activant le dispositif (50) d'antidémarrage et
- activant le dispositif (70) de réglage de remplacement, pour la production de signaux (STe) de commande de convertisseur, qui provoquent un fonctionnement en freinage du moteur (20) de traction.

5. Véhicule (10) suivant la revendication 4,
**caractérisé en ce que**
le dispositif (60) de contrôle détermine le sens du flux d'énergie et, avec celui-ci un fonctionnement en traction, à l'aide de tensions (U) et de courants (I) ou de grandeurs, qui s'en déduisent, mesurés dans le convertisseur (30) ou le moteur ou calculés pour le convertisseur (30) ou pour le moteur.

6. Véhicule (10) suivant l'une des revendications 1 à 3 précédentes,
**caractérisé en ce que**
le dispositif (60) de contrôle contrôle la présence de l'instruction (SB) de freinage rapide et, en présence de l'instruction (SB) de freinage rapide, directement
- désactive le dispositif (40) de commande de la traction ou du moins interrompt le flux de signal de signaux (STa) de commande de convertisseur du dispositif (40) de commande de la traction ou dispositif (50) d'antidémarrage,
- active le dispositif (50) d'antidémarrage, et
- active le dispositif (70) de réglage de remplacement pour la production de signaux (STe) de commande de convertisseur, qui provoquent un fonctionnement en freinage du moteur (20) de traction.

7. Véhicule (10) suivant l'une des revendications précédentes, **caractérisé en ce que**
le dispositif (50) d'antidémarrage a un composant matériel ou est formé d'un composant matériel, en particulier d'un composant matériel indépendant du dispositif (40) de commande de la traction et du dispositif (70) de réglage de remplacement.

8. Véhicule (10) suivant l'une des revendications précédentes, **caractérisé en ce que**
le véhicule est un véhicule ferroviaire.

9. Procédé pour faire fonctionner un véhicule (10), en présence d'une instruction (SB) de freinage rapide, dans lequel le véhicule (10) comporte
- au moins un moteur (20) de traction avec un convertisseur (30) électrique monté en amont électriquement,
- un dispositif (40) de commande de la traction pour la production de signaux (STa) de commande du convertisseur pour la commande du convertisseur (30) pour un fonctionnement en circulation et un fonctionnement en freinage normal, et
- un dispositif (50) d'antidémarrage, qui est monté électriquement entre le convertisseur (30) et le dispositif (40) de commande de la traction et qui est constitué pour empêcher, si le véhicule s'arrête, en particulier s'il s'arrête à un arrêt, un acheminement en direction du convertisseur (30) de signaux (STa) de commande du convertisseur, qui auraient provoqué un fonctionnement en traction du moteur (20) de traction,
**caractérisé en ce qu'**
en présence d'une instruction (SB) de freinage rapide, on active, directement ou seulement lors d'un fonctionnement défectueux du dispositif (40) de commande la traction, un mode de freinage particulier, dans lequel
- on désactive le dispositif (40) de commande de la traction ou du moins on interrompt un flux de signal de signaux (STa) de commande de convertisseur du dispositif (40) de commande la traction au dispositif (50) d'antidémarrage,
- on active le dispositif (50) d'antidémarrage, et
- par un dispositif (70) de réglage de remplacement du véhicule (10), on transmet des signaux (STe) de commande de convertisseur, qui provoquent un fonctionnement en freinage du moteur (20) de traction, au convertisseur (30) par le dispositif (50) d'antidémarrage.

10. Procédé suivant la revendication 9,
**caractérisé en ce que**
on sépare fonctionnellement le dispositif (70) de réglage de remplacement et le dispositif (40) de commande de la traction et on les fait fonctionner indépendant l'un de l'autre.

11. Procédé suivant l'une des revendications 9 à 10 précédentes, **caractérisé en ce que**
- dans le cas de la présence de l'instruction (SB) de freinage rapide, le dispositif (40) de commande de la traction effectue le freinage rapide, et on transmet des signaux (STa) de commande de convertisseur au convertisseur (30) par le dispositif (50) d'antidémarrage, qui n'est pas encore activé, et
- par un dispositif (60) de contrôle, on contrôle le fonctionnement du convertisseur et/ou les signaux (STa) de commande de convertisseur arrivant au convertisseur (30) et, en présence de l'instruction (SB) de freinage rapide et d'un fonctionnement en traction du moteur (20) de traction, on active un mode de fonctionnement particulier, dans lequel
- on désactive le dispositif (40) de commande de la traction ou du moins on interrompt le flux de signal de signaux (STa) de commande de convertisseur du dispositif (40) de commande de la traction au dispositif (50) d'antidémarrage,
- on active le dispositif (50) d'antidémarrage, et
- on active le dispositif (70) de réglage de remplacement pour la production de signaux (STe) de commande de convertisseur, qui provoquent un fonctionnement en freinage du moteur (20) de traction.

12. Procédé suivant l'une des revendications 9 à 10 précédentes, **caractérisé en ce qu'**
en présence de l'instruction (SB) de freinage rapide, directement
- on désactive le dispositif (40) de commande de la traction ou du moins on interrompt le flux de signal de signaux (STa) de commande de convertisseur du dispositif (40) de commande de la traction au dispositif (50) d'antidémarrage,
- on active le dispositif (50) d'antidémarrage,
- par un dispositif (70) de réglage de remplacement, on produit des signaux (STe) de commande de convertisseur, qui provoquent un fonctionnement en freinage du moteur (20) de traction.
